(19) Europäisches Patentamt
European Patent Office
Office européen des brevets

(11) EP 3 324 018 A1

(12) # EUROPEAN PATENT APPLICATION
published in accordance with Art. 153(4) EPC

(43) Date of publication:
**23.05.2018 Bulletin 2018/21**

(21) Application number: **16817295.5**

(22) Date of filing: **15.04.2016**

(51) Int Cl.:
***F02C 1/00*** *(2006.01)* ***C01F 11/04*** *(2006.01)*
***C01F 11/18*** *(2006.01)*

(86) International application number:
**PCT/ES2016/070265**

(87) International publication number:
**WO 2017/001710 (05.01.2017 Gazette 2017/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **29.06.2015 ES 201500493**

(71) Applicant: **Universidad De Sevilla**
**41013 Sevilla (ES)**

(72) Inventors:
- **CHACARTEGUI RAMÍREZ, Ricardo**
  **41007 Sevilla (ES)**
- **BECERRA VILLANUEVA, José Antonio**
  **41200 Alcalá del Rio - Sevilla (ES)**
- **VALVERDE MILLÁN, José Manuel**
  **41012 Sevilla (ES)**
- **ORTIZ DOMINGUEZ, Carlos**
  **41001 Sevilla (ES)**
- **ALOVISIO, Alessandro**
  **41092 Sevilla (ES)**

(74) Representative: **Carvajal y Urquijo, Isabel et al**
**Clarke, Modet & Co.**
**Suero de Quiñones, 34-36**
**28002 Madrid (ES)**

(54) **INTEGRATED CALCINATION-CARBONATION SYSTEM AND CLOSED-LOOP CO2 CYCLE FOR THERMOCHEMICAL ENERGY STORAGE AND ELECTRICAL ENERGY GENERATION**

(57) The object of the invention is the integration of a carbonation-calcination cycle (calcium looping) with a closed power loop through which $CO_2$ or mixtures of $CO_2$ with other gases evolve in order to provide thermochemical storage for power plants and industrial processes with heat available at medium temperature (higher than 550°C). This is applicable, among others, to solar plants and industrial processes. With the developed system, operating yields higher than 46% are achieved with a storage capacity with a significant long-term lag between loading and unloading.

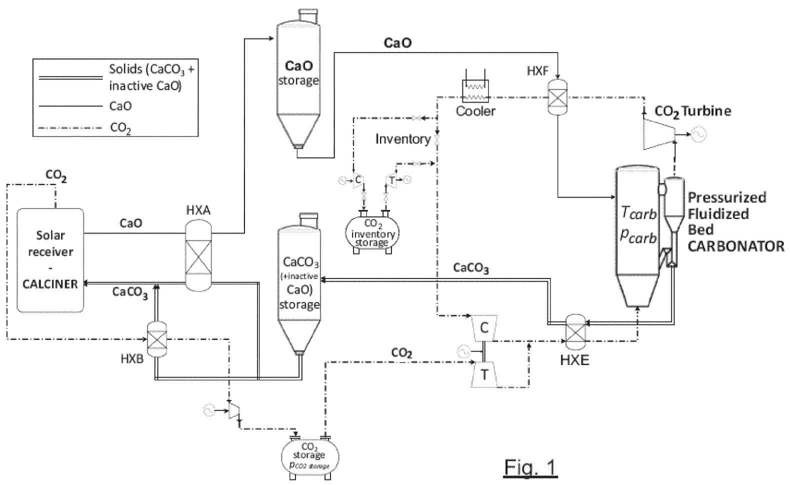


Fig. 1

EP 3 324 018 A1

## Description

### Technical field

The invention falls under the technical field of technologies aimed at energy storage, more specifically relating to thermochemical energy storage and the integration thereof with energy generation technologies from medium and high temperature heat sources.

### State of the art

Energy storage is one of the fields of research with the greatest potential for growth at a global level, driven among other factors, by the need to achieve an improved integration of renewable generation technologies, the improvement of the capacity to decouple production and energy demand being fundamental for the development of these technologies.

To this end, a large number of thermal storage technologies have been researched in recent years, with systems based on sensitive heat storage being the most developed at an industrial level [1]. These systems generally use molten salts, mineral oils or ceramic materials as a means of storage.

Another widely studied storage system consists in taking advantage of the latent heat of materials that undergo phase changes, generally between solid and liquid [2].

A third possibility is thermochemical storage, which has recently acquired significant prominence, consisting of decoupling production and demand by means of chemical compounds. The heat obtained from an external source is used to bring about an endothermic reaction, the products of which will be stored until the moment of energy demand, in which, by means of the inverse (reversible) exothermic reaction, they release the stored heat making it available for use in thermal generation systems.

The main advantage of thermochemical storage is the greater energy density that these compounds usually have when compared to the components used in phase change storage or by means of sensible heat [1], [2].

Chemical storage technology is in an initial research stage, so the capacity for development thereof is enormous, given the great storage potential of this technology and the increase in plants that require solving the problem of discontinuous production and production dependent on external environmental factors.

From among the technologies intended for large-scale energy storage by means of thermochemical storage, one of the most promising is the carbonation-calcination cycle, normally called calcium looping (CaL) [3], [4].

Calcium looping (CaL) is a process based on the reversible reaction between calcium oxide and carbon dioxide to produce calcium carbonate:

$$CaO_{(s)} + CO_{2(g)} \leftrightarrow CaCO_{3(s)}$$

$$\Delta H_r^0 = -\ 178 \frac{MJ}{kmol}$$

The basic operations of the cycle start with the decomposition of the $CaCO_3$ in the calcination reactor (calciner) producing CaO and CO2, which needs a large energy contribution given the high energy density of calcium carbonate. Once the products are obtained and the energy that these contain is recovered, they are stored until the subsequent use thereof. The possible thermal storage time will depend largely on the conditions of the storage itself and on the energy demand, which may be weeks or even months [4]. In renewable energy plants, especially those based on solar energy, the typical storage time will be hours (during the night) or days (in periods of low solar radiation).

Once the storage period has ended, the components are taken separately to the carbonation reactor (carbonator), where, by means of the inverse reaction, the energy stored in chemical form will be released.

In order to provide the greatest possible solid-gas contact, the use of fluidized bed (carbonator and calciner) reactors is proposed. Typically, a quick fluidization process is carried out with gas speeds of the order of 5-10 m/s. This would present an advantage of this technology for the incorporation thereof into the market, given the proven efficiency and durability of this type of reactors.

One of the main characteristics of the calcination-carbonation process in post-combustion $CO_2$-capturing conditions is the quick loss of reactivity of the CaO particles that is observed after a certain number of cycles have occurred [5]-[7], due to the changes in the porosity and crystalline structure thereof, which causes the reaction to be not completely reversible. This fact represents the main disadvantage of the system and in order to mitigate the problem, fresh $CaCO_3$ is brought to the system [6], [8]. Furthermore, in order to reduce the loss of CaO activity, a series of improvements are being researched such as an intermediate recarbonation system [9]-[11], the thermal pretreatment of the sorbent [9], [12], [13], operation with synthetic sorbents, [14]-[16], or the injection of steam into the system in the carbonator and in the calciner [17]-[19]. Nevertheless, it should be noted that under thermal storage conditions that would potentially involve carbonation with high-concentration $CO_2$ gas at high temperatures and calcination in the absence of $CO_2$ at not-too-high temperature levels, the reactivity of the CaO would be very stable [12].

So far, one of the reasons that has been holding back the implementation of calcium looping for capturing $CO_2$ is the large amount of heat that must be provided in the calciner [20], [21], which causes an important energy penalty, given the thermodynamic cycles that are currently being developed.

The present invention envisages the development of a thermochemical storage system based on calcium looping together with a closed cycle through which $CO_2$ or mixtures of $CO_2$ gases evolve, for power generation. The assembly achieves significant energy storage performance, in terms of the yields achieved-values above 46% depending on the implemented configuration, as described below, as well as in terms of the use of widely available and cheap materials and the possibility of storing energy during extended periods. The proposed system optimizes the energy efficiency capacities of both systems integrated by the configuration of the elements that make it up and the combination of operating parameters that it enables associated to both systems. In the $CO_2$ loop associated with the power loop, pure $CO_2$ or even mixtures of $CO_2$ with other gases can evolve, among which are Nitrogen, Helium, air, steam, not excluding other gases or combinations that are not mentioned.

The application of this integrated generation system applied to **solar tower plants achieves overall efficiency of the assembly, defined as the relationship between the energy entering the system and that obtained in terminals of the alternators above 46%, enabling long-term storage capacities where the storing and unloading processes can be decoupled for long periods of time.**

The invention presented in this patent can be applied as an energy storage system in any application with heat available at medium temperature at the inlet of the calciner, being useful among other applications, and not excluding others that are not mentioned, for solar plants, energy recovery systems or industrial processes.

Calcium looping (CaL) technology is being widely studied, fundamentally for the application thereof as a $CO_2$-capturing system. Thus, the basic cycle consists of capturing the $CO_2$ from the stream of exhaust gases from a thermal plant by using CaO as a sorbent to produce $CaCO_3$. Once the $CO_2$ is extracted and the heat is recovered, the gaseous stream is dumped into the atmosphere. This application is also a promising technology, capturing yields close to 90%, obtained in pilot plants-to the MW order-[22].

To a lesser extent than in the case of the application for capturing $CO_2$, some papers are being published using calcium looping for thermochemical storage [4]. From among the patents related to "Calcium Looping" are those developed by the Ohio State University [23], [24] as well as those associated with equipment and systems submitted by WORMSER ENERGY SOLUTIONS INC [25], [26] or those proposed by Abanades et al. [27]. However, none of them covers the object of the present invention.

The invention that is presented integrates closed cycles of $CO_2$ or gas mixtures with $CO_2$ for generating electric power in combination with thermochemical energy storage from calcium looping (CaL). The high yield obtained by means of the integrated system, the use of natural, non-toxic, abundant and low-cost materials, and the capacity for storage and subsequent generation with prolonged periods of lag between both make this invention a significant advance in the art with unique characteristics in the application thereof.

## REFERENCES

[1] K. E. N'Tsoukpoe, H. Liu, N. Le Pierrès, and L. Luo, "A review on long-term sorption solar energy storage," Renew. Sustain. Energy Rev., vol. 13, no. 9, pp. 2385-2396, 2009.

[2] P. Pardo, a. Deydier, Z. Anxionnaz-Minvielle, S. Rouge, M. Cabassud, and P. Cognet, "A review on high temperature thermochemical heat energy storage," Renew. Sustain. Energy Rev., vol. 32, pp. 591-610, 2014.

[3] A. Abedin and M. Rosen, "A Critical Review of Thermochemical Energy Storage Systems.," Open Renew. Energy J., pp. 42-46, 2011.

[4] S. E. B. Edwards and V. Materic, "Calcium Looping in solar power generation plants," Sol. Energy, vol. 86, no. 9, pp. 2494-2503, 2012.

[5] T. Shimizu, T. Hirama, H. Hosoda, K. Kitano, M. Inagaki, and K. Tejima, "A Twin Fluid-Bed Reactor for Removal of CO2 from Combustion Processes," Chem. Eng. Res. Des., vol. 77, no. 1, pp. 62-68, 1999.

[6] J. C. Abanades, "The maximum capture efficiency of CO2 using a carbonation/calcination cycle of CaO/CaCO3," Chem. Eng. J., vol. 90, no. 3, pp. 303-306, 2002.

[7] J. C. Abanades and D. Alvarez, "Conversion limits in the reaction of CO2 with lime," Energy and Fuels, vol. 17, no. 2, pp. 308-315, 2003.

[8] N. Rodriguez, M. Alonso, and J. C. Abanades, "Average activity of CaO particles in a Calcium Looping system," Chem. Eng. J., vol. 156, no. 2, pp. 388-394, 2010.
[9] J. M. Valverde, P. E. Sanchez-Jimenez, and L. a. Perez-Maqueda, "High and stable Co2 capture capacity of natural limestone at Ca-looping conditions by heat pretreatment and recarbonation synergy," Fuel, vol. 123, pp. 79-85, 2014.
[10] B. Arias, G. S. Grasa, M. Alonso, and J. C. Abanades, "Post-combustion Calcium Looping process with a highly stable sorbent activity by recarbonation," Energy Environ. Sci., vol. 5, no. 6, p. 7353, 2012.
[11] M. E. Diego, B. Arias, G. Grasa, and J. C. Abanades, "Design of a novel fluidized bed reactor to enhance sorbent performance in CO2 capture systems using CaO," Ind. Eng. Chem. Res., vol. 53, no. 24, pp. 10059-10071, 2014.
[12] P. E. Sanchez-Jimenez, J. M. Valverde, and L. a. Perez-Maqueda, "Multicyclic conversion of limestone at Ca-looping conditions: The role of solid-sate diffusion controlled carbonation," Fuel, vol. 127, pp. 131-140, 2014.
[13] V. Manovic and E. J. Anthony, "Thermal activation of CaO-based sorbent and self-reactivation during CO2 capture looping cycles," Environ. Sci. Technol., vol. 42, no. 11, pp. 4170-4174, 2008.
[14] J. M. Valverde, "Ca-based synthetic materials with enhanced CO2 capture efficiency," J. Mater. Chem. A, vol. 1, no. 3, 2013.
[15] Z. Zhou, P. Xu, M. Xie, Z. Cheng, and W. Yuan, "Modeling of the carbonation kinetics of a synthetic CaO-based sorbent," Chem. Eng. Sci., vol. 95, pp. 283-290, 2013.
[16] Y. Li, L. Shi, C. Liu, Z. He, and S. Wu, "Studies on CO2 uptake by CaO/Ca3Al2O6 sorbent in Calcium Looping cycles," J. Therm. Anal. Calorim., 2015.
[17] S. Champagne, D. Y. Lu, A. MacChi, R. T. Symonds, and E. J. Anthony, "Influence of steam injection during calcination on the reactivity of CaO-based sorbent for carbon capture," Ind. Eng. Chem. Res., vol. 52, no. 6, pp. 2241-2246, 2013.
[18] R. T. Symonds, D. Y. Lu, V. Manovic, and E. J. Anthony, "Pilot-scale study of CO 2 capture by CaO-based sorbents in the presence of steam and SO 2," Ind. Eng. Chem. Res., vol. 51, no. 21, pp. 7177-7184, 2012.
[19] V. Manovic and E. J. Anthony, "Carbonation of CaO-based sorbents enhanced by steam addition," Ind. Eng. Chem. Res., vol. 49, no. 19, pp. 9105-9110, 2010.
[20] N. Rodriguez, M. Alonso, G. Grasa, and J. C. Abanades, "Heat requirements in a calciner of CaCO3 integrated in a CO2 capture system using CaO," Chem. Eng. J., vol. 138, no. 1-3, pp. 148-154, 2008.
[21] A. Martinez, Y. Lara, P. Lisbona, and L. M. Romeo, "Energy penalty reduction in the Calcium Looping cycle," Int. J. Greenh. Gas Control, vol. 7, pp. 74-81, 2012.
[22] B. Arias, M. E. Diego, J. C. Abanades, M. Lorenzo, L. Diaz, D. Martinez, J. Alvarez, and a. Sanchez-Biezma, "Demonstration of steady state CO2 capture in a 1.7MWth Calcium Looping pilot," Int. J. Greenh. Gas Control, vol. 18, pp. 237-245, 2013.
[23] S. Ramkumar and L. S. Fan, "Calcium Looping process for high purity hydrogen production integrated with capture of carbon dioxide, sulfur and halides," 2014.
[24] S. Ramkumar, M. V Iyer, and L. S. Fan, "High purity, high pressure hydrogen production with in-situ co2 and sulfur capture in a single stage reactor," 2014.
[25] A. Wormser, "Systems, devices and methods for Calcium Looping," 2012. EP 2478074 A1
[26] A. Wormser, "Systems, devices and methods for Calcium Looping," 2012.
[27] G. J. C. ABANADES, R. B. ARIAS, and C. Y. ALVAREZ, "System and method for energy storage using circulating fluidized bed combustors." Google Patents, 2014. EP 2762781 A1

**Detailed description of the invention**

The present invention relates to a thermochemical energy storage system applicable to systems with heat available at medium/high temperature based on the joint use of a thermochemical storage system according to the calcium looping cycle and a power loop for closed-cycle power generation where $CO_2$ or mixtures of gases with $CO_2$ evolve. According to the configuration of the integration and operating conditions of both technologies, the overall net yield reaches values above 46%. This yield is defined as the relationship between the energy obtained in the complete cycle (minus the consumption of the plant) and the energy input in the calciner.

In the $CO_2$ loop associated with the power loop, pure $CO_2$ or mixtures of $CO_2$ with other gases can evolve, among which are Nitrogen, Helium, air, steam, not excluding other gases or combinations thereof that are not mentioned.

The proposed energy storage system is made up of two subsystems, one associated to the calcination/carbonation cycle (Calcium Looping) and another to a closed cycle of $CO_2$, having a series of heat exchangers that link both subsystems, such that the recovery of heat is maximized, as well as the adjustment of the operating parameters and the benefits obtained from the joint operation of both systems in the power generation mode. Both systems converge between two fluidized bed reactors, where the carbonation and the calcination of the sorbent takes place in two temporally differentiated storage and generation phases.

The endothermic reaction of the formation of CaO and $CO_2$ from $CaCO_3$ with external heat input is produced in the calciner. The energy from the thermal source at medium temperature (higher than 550°C) is used to carry out the endothermic reaction and both products (CaO and $CO_2$) are stored for the subsequent use thereof in the production of electric power in the unloading phase in the coupled power cycle. Given the characteristic of the products, the system can decouple storage and generation for long periods of time. In the generation phase, $CO_2$ and CaO react by means of exothermic reaction.

This invention proposes the integration of a cycle in closed power loop on the carbonator side through which it evolves $CO_2$ or mixtures of $CO_2$ and gases. The heat generated in the carbonation reaction is transmitted to the $CaCO_3$ formed and the stream of $CO_2$, or mixture of $CO_2$ with other gases, which does not participate in the carbonation reaction. The amount of $CO_2$ that does not react varies depending on the loss of CaO activity based on the number of carbonation cycles to which it is submitted. As a result, the gas stream, whether made of pure $CO_2$ or $CO_2$ with other gases, at high pressure and temperature, evolves through the closed cycle of the power loop for the production of electric power. It has two possible variants:

a) direct integration with the gases evolving through a thermal turbine.

b) indirect integration with the gases evolving through the closed cycle and generating heat exchange with a power system by means of external combustion motors: gas turbine with $CO_2$ or hot air, steam turbine, Stirling motors, hybrid systems, combined cycles, industrial processes in general. This list does not exclude other possible indirect integrations of the system.

The $CO_2$/gas loop is closed by deriving it to a storage system thereof (independent from the functional point of view of the storage for calcium looping). In the case of the direct configuration, it will need compression in order to close the cycle after the expansion in the turbine.

The integration of the power loop proposed in the carbonator of the calcium looping cycle enables an energy recovery process that maximizes the relationship between the energy obtained in the power cycle and the energy recovery between the power cycle and the calcium looping through an assembly of heat exchangers and divisions of the flows. This integration enables optimizing the required operation and parameters both in the inbound CaO and $CO_2$ streams and existing processes, as well as in the carbonator and in the electric generation operation.

In the proposed invention, the $CO_2$ that does not react in the carbonation evolves in a closed cycle for the production of power and for heating other streams of the integrated system based on the thermal and/or electric demand of the plant, by means of the optimized management of the flows that evolve through the different systems of exchangers and the amount of flow that evolves through the power loop regulated by means of the storage systems specific to the power loop.

Based on the required generation conditions, the operating parameters of the heat generation assembly are adjusted in the carbonator and in the power generation system, optimizing the operation of the assembly.

In order to control the energy transported in the power loop coming out of the carbonator, and thus the power generated, the mass flow rate that evolves through the power loop is controlled. The thermal generation is controlled by acting on the values of the mass flow rates and flow temperatures as well as the pressure in the carbonator. Through the power loop, pure $CO_2$ or mixtures of $CO_2$ with other fluids can evolve such as: N2, He, Air, Steam, among others, and not excluding those not mentioned. The configuration of the system and the optimal parameters thereof vary based on the application of the presented concept and the required power levels.

Figures 1, 2 and 3, show three direct integration diagrams of the calcium looping assembly with a power loop integrated in the carbonator. Figures 4, 5 and 6, show three direct integration diagrams of the calcium looping assembly with a power loop integrated in the carbonator. In the proposed configurations, in the power loop, the mass flow rate of $CO_2$ (or $CO_2$/ gas mixture) evolves from the carbonator outlet in the direction of the gas turbine where it expands, generating electricity. Figure 1 shows a direct integration with heat recovery in HXF for heating the stream of CaO with the outlet stream of the power loop turbine and with HXE for recovering heat from the stream of $CaCO_3$ that comes out of the carbonator. In the configuration shown in Figure 2, an additional HXG heat exchange train is added to the configuration shown in Figure 1 and the gas stream is divided, different fractions of mass flow rate evolving for heating the streams associated to the calcium looping based on the flow rates that evolve and the temperature levels required under different operating conditions of CaO (in the HXF exchanger) and $CO_2$ (HFG exchanger). In turn, the heat available for these streams and the fractions derived towards each exchanger are dependent on the total flow rate that evolves through the turbine and the level of expansion reached therein. Both parameters are controlled by controlling the pressure in the carbonator, the feed pressure of the flow of the power loop from the storage/regulation system and controlling the mass flow rate circulating in the power loop by means of the contribution or extraction of part of the flow rate from the storage system. All of these parameters are adjusted based on the operating requirements in the generation mode.

The two streams that have evolved towards the HXF and HXG exchangers combine again in order to evolve by closing the power loop. The storage/regulation system of the power loop enables storage in the loading phase and enables regulating the flow rate circulating through the power loop, by injecting or extracting flow rate for which it has a compression system for the filling thereof and an expansion system for injecting flow rate into the system. In order to reduce the energy consumption of this compression process for the filling, a cooling system is optionally incorporated.

The flow proceeding from the power loop joins the flow of $CO_2$ from the energy storage system of the calcium looping. This $CO_2$ stored from the Calcium Looping system expands in a turbo-compressor group that generates electric power in addition to that obtained in the main turbine. In the configuration proposed in Figure 3, an added exchange system is added to the one presented in the configuration proposed in Figure 2. The stream of $CO_2$ proceeding from the storage of the calcium looping and the stream proceeding from the power loop join together and evolve through a train of parallel exchangers (HXG and HXI), which optimizes the heat recovery process at a low temperature for the stream of $CO^2$ entering the carbonator. In the HXE exchanger, the high-temperature heat of the stream of $CaCO_3$ is recovered in the final preheating phase of the flow of $CO_2$ entering the carbonator. This assembly of exchangers ensures reaching the required temperatures with a high level of heat recovery. Furthermore, in all three configurations, an assembly of heat exchangers (HXE) recovers heat for the $CO_2$ that evolves in the direction of the carbonator from the stream of $CaCO_3$ coming out of it. The configuration of the power loop and the arrangement of the heat recovery system between streams presented by the invention optimizes the heat recovery process between streams and maximizes the efficiency of the assembly in the generation phase.

In the energy storage phase, with a separate treatment, a heat exchange arrangement is considered between the stream of $CaCO_3$ and $CO_2$ generated in the calciner with a division of the flow of $CaCO_3$ into two streams towards an assembly of parallel exchangers where the stream of $CO_2$ is cooled and a portion of the flow of $CaCO_3$ is heated (HXB), and another exchanger where a portion of the $CaCO_3$ is heated by the flow of CaO coming out of the calciner (HXA).

The cooled $CO_2$ is subjected to an additional refrigerated compression process in several stages for the storage thereof and subsequent use in the unloading phase.

One aspect is the integrated thermochemical energy storage and electric power generation system of the present invention, where the power loop in a closed cycle of $CO_2$ or mixture of $CO_2$ with other gases is integrated into the carbonator.

Another aspect is the integrated thermochemical energy storage and electric power generation system of the present invention, wherein carbonation is carried out at a pressure of $CO_2$ between 1 and 12 bars.

Another aspect is the integrated thermochemical energy storage and electric power generation system of the present invention, wherein calcination is carried out at a temperature between 675 and 950°C and carbonation is carried out at a temperature between 850 and 950°C.

The advantages of this new integration of cycles are:

- High-capacity and scalable energy storage system that ranges from 1 MW to 1000 MW.
- It has high performance values in energy recovery, defined as the relationship between power in alternator terminals and energy contributed, up to 48% according to operating conditions. The values obtained are comparable to those existing in actual power plants without a storage system.
- Possibility of use in applications with heat available at temperatures above 550°C.
- It is of special interest (although not exclusive) for solar applications, energy recovery systems and integration in industrial systems.
- The materials used are abundant in nature, and very cheap, non-toxic and non-degradable. Furthermore, mature technologies that are already available are used. All this results in a system that requires relatively low investment compared to other energy storage technologies, especially at a scale above 50 MW.
- It enables the storage of energy for long periods of lag between storage and generation.
- It shares technological development with $CO_2$-capturing systems.

**Exemplary embodiment of the invention**

As an example of the application of the invention, the case is shown of a solar plant and an energy storage capacity of 100 MW. Results of the integrated system with the power loop in direct integration are presented for the three proposed integration alternatives, Figure 1, Figure 2, Figure 3, based on two key parameters in the pressure generation phase in the carbonator and the average residual activity of the CaO in the carbonation, in other words, the sorbent fraction that reacts with the $CO_2$ in the carbonator.

For the example that is presented, the parameters that have been taken are:

| | | |
|---|---|---|
| Net power absorbed in the calciner | 100 | MW |
| Temperature in the carbonator | 875 | °C |

(continued)

| | | |
|---|---|---|
| Average reactivity of the CaO in the carbonator | 0.30 | - |
| Heat loss in the carbonator | 10 | % |
| Ambient temperature | 20 | °C |
| Minimum temperature difference of solid-solid exchange | 20 | °C |
| Minimum temperature difference of gas-gas exchange | 15 | °C |
| Minimum temperature difference of gas-solid exchange | 10 | °C |
| Energy consumption associated to the transportation of solids | 5 | MJ/ton/100 m |
| Estimated equivalent transportation distance | 200 | m |
| Isentropic efficiency in the turbine | 0.89 | - |
| $CO_2$ storage pressure | 75 | bar |

The analysis of the effect of different configurations is shown in Figures 7 and 8.

The mass flow of $CO_2$ in the closed cycle increases when the ratio of pressure PR nears 1:

$$PR = \frac{P_{carb}}{P_{out,turbine}}$$

With regard to the efficiency of the cycle, it depends on the balance between the power produced in the gas turbine and the resulting power consumption in the system (mounted on a shaft) made up of the turbine and the $CO_2$ compressor. This is because the power required for the compression of the $CO_2$ before the storage on the side of the calciner does not influence the balance in the area of the carbonator, thus maintaining it constant throughout the parametric analyses carried out.

As described in the state of the art, the capturing efficiency of $CO_2$ by means of calcium looping is strongly conditioned by the activity value of the CaO in the carbonation reaction which varies based on the number of cycles to which it is subjected. Figure 7 shows a study of the behavior of the proposed cycle focused on the analysis of this parameter. As can be seen, the greater the activity of CaO (more efficient carbonation), the better the yield of the cycle, the lower the cost and size of the storage tanks and heat exchangers. Figure 8 shows the equally yielding regions for the configuration of Figure 3, with direct integration, based on the pressure in the carbonator and turbine outlet for specific conditions of the cycle and circulating flows. An optimal operating region is seen based on these parameters with relevant yield values.

The previously published experimental papers on the measurement by means of thermogravimetry of multicyclical conversion of CaO derived from limestone have been developed under special conditions for the $CO_2$ capturing process (Perejon A et al. The Calcium-Looping technology for CO2 capture: On the important roles of energy integration and sorbent behavior. Appl Energy 2015; 162:787-807, doi:10.1016/j.apenergy.2015.10.121). These conditions for capturing $CO_2$ consist of calcination at high temperatures and high partial pressure of $CO_2$ and carbonation at low partial pressure of $CO_2$, obtaining a decrease of the capturing yield of $CO_2$ with the number of cycles (Figure 9). After a high number of cycles, the conversion of CaO asymptotically approaches 0.07.

However, the conditions in which the calcination-carbonation cycles are integrated with a power loop in a closed cycle of $CO_2$ comprise carbonation at high partial pressure of $CO_2$, at high temperature. Furthermore, it is desirable that the calcination be carried out at the lowest possible temperature in order to use solar receptors based on metallic alloys available on the market. In such conditions, in the present invention, the multicycle behavior of natural limestone was measured by means of thermogravimetry (B. Sarrion, J. M. Valverde, A. Perejon, L. A. Perez-Maqueda, P. E. Sanchez-Jimenez. On the multicycle activity of natural limestone/dolomite for cheap, efficient and non-toxic Thermochemical Energy Storage of Concentrated Solar Power. Energy Technology. doi. 10.1002/ente.201600068; article in press (not published)). Specifically, the conditions were: carbonation at 850°C in an atmosphere of pure $CO_2$ and calcination at 700°C in an atmosphere of pure He. Figure 9 shows the results obtained at these conditions based on the number of cycles N. Under these conditions, residual activities greater than 0.5 are obtained, as shown in Figure 9. In said figure, these results are compared with the results obtained for cycles carried out under conditions for capturing $CO_2$, which were carried out under the following conditions: carbonation at 650°C in an atmosphere of 15% $CO_2$/85% air volume/volume and calcination at 950°C in an atmosphere of 70% $CO_2$/30% air volume/volume.

These results show that the combination of the calcination-carbonation cycle in which $CaCO_3$ is calcined with a power loop in a closed cycle of $CO_2$ has a synergistic effect with the behavior of the natural limestone under these conditions that has not been previously described.

## Description of the drawings

Figure 1. - Proposed general configuration (1). Direct integration.
The figure shows the general diagram of the integrated system with direct integration. In the same, the generation turbine is integrated in the power loop itself. The different heat and work exchange elements are indicated as well as accumulation tanks for solids and gases, proposed.
Figure 2. - Configuration 2. Direct integration
The figure shows a new configuration on the general diagram of the system with direct integration in which an additional HXG heat exchange train is added.
Figure 3. - Configuration 3. Direct integration
The figure shows a new configuration on the diagram of configuration 2, adding a train of parallel exchangers (HXG and HXI) that optimizes the heat recovery process for the stream of $CO_2$ entering the carbonator.
Figure 4. - General configuration 4. Indirect integration.
The figure shows the general diagram of the integrated system with indirect integration, so that the heat of the stream of gases ($CO_2$ or mixture) can be used for diverse uses according to demand. The different heat and work exchange elements are indicated as well as accumulation tanks for solids and gases, proposed.
Figure 5. - Configuration 5. Indirect integration.
The figure shows a new configuration on the diagram of configuration 5 with indirect integration in which an additional HXG heat exchange train is added.
Figure 6. - Configuration 6. Indirect integration.
The figure shows a new configuration with indirect integration on the diagram of configuration 5, adding a train of parallel exchangers (HXG and HXI) that optimizes the heat recovery process for the stream of $CO_2$ entering the carbonator.
Figure 7. - Yield according to the activity of the sorbent, configuration and pressure relationship.
The figure shows the yield obtained by using different configurations based on the degree of activity of the sorbent in the carbonation in the optimal point (for each configuration) of the pressure relationship between the carbonator and turbine outlet.
Figure 8. - Cycle yield based on the pressure relationship.

Contour plot of the cycle yield based on the ratio of the pressure and of the outlet pressure of the turbine. It is can be seen how better efficiency values are obtained at low outlet pressures in the turbine.

Figure 9. - Conversion of CaO derived from limestone obtained by thermogravimetrical analysis (adapted from B. Sarrion, J. M. Valverde, A. Perejon, L. A. Perez-Maqueda, P. E. Sanchez-Jimenez. On the multicycle activity of natural limestone/dolomite for cheap, efficient and non-toxic Thermochemical Energy Storage of Concentrated Solar Power. Energy Technology, doi. 10.1002/ente.201600068; article in press (not published)). The squares represent the results of calcination-carbonation cycles with optimal operating conditions for the storage of concentrated solar energy according to the present application: carbonation at 850°C in an atmosphere of pure $CO_2$ and calcination at 700°C in an atmosphere of pure He. The figure shows the results obtained at these conditions based on the number of cycles N. The triangles represent the results of calcination-carbonation cycles in conditions for capturing $CO_2$: carbonation at 650°C in an atmosphere of 15% $CO_2$/85% air (volume/volume) and calcination at 950°C in an atmosphere of 70% $CO_2$/30% air (volume/volume).

## Claims

1. An integrated system for thermochemical energy storage and electric power generation **characterized in that** a calcination-carbonation cycle in which calcination of $CaCO_3$ is produced is integrated, directly or indirectly, with a power loop in a closed cycle of $CO_2$ or mixture of $CO_2$ with other gases.

2. The integrated system according to the preceding claim, **characterized in that** in the direct integration, the flow of gases of the power loop evolves directly through a main thermal turbine for electric generation.

3. The system according to the preceding claim, **characterized in that** in the indirect integration, the flow of gases of the secondary loop evolves through a series of exchangers in order to provide heat to an external electric generation system or to an industrial process.

4. The integrated system, according to the preceding claims, **characterized in that** there is excess $CO_2$ in the carbonator.

5. The integrated system according to the preceding claims, **characterized in that** in the carbonation phase the heat recovery system comprises series and parallel exchangers and flow bypass.

6. The integrated system according to the preceding claims, **characterized in that** during the calcination, when $CO_2$ and CaO are generated, the heat recovery system between the streams of $CaCO_3$ comprises parallel exchangers and flow divisions.

7. The integrated system according to the preceding claims, **characterized in that** in the energy storage phase, during the calcination phase in which the $CaCO_3$ is decomposed into $CO_2$ and CaO, refrigerated compression is used in several stages.

8. The integrated system according to the preceding claims, **characterized in that** the power loop in a closed cycle of $CO_2$ or mixture of $CO_2$ with other gases is integrated in the carbonator.

9. The integrated system according to the preceding claims, **characterized in that** carbonation is carried out at a pressure of $CO_2$ between 1 and 12 bars.

10. The integrated system according to the preceding claims, **characterized in that** calcination is carried out at a temperature between 675 and 950°C and carbonation is carried out at a temperature between 850 and 950°C.

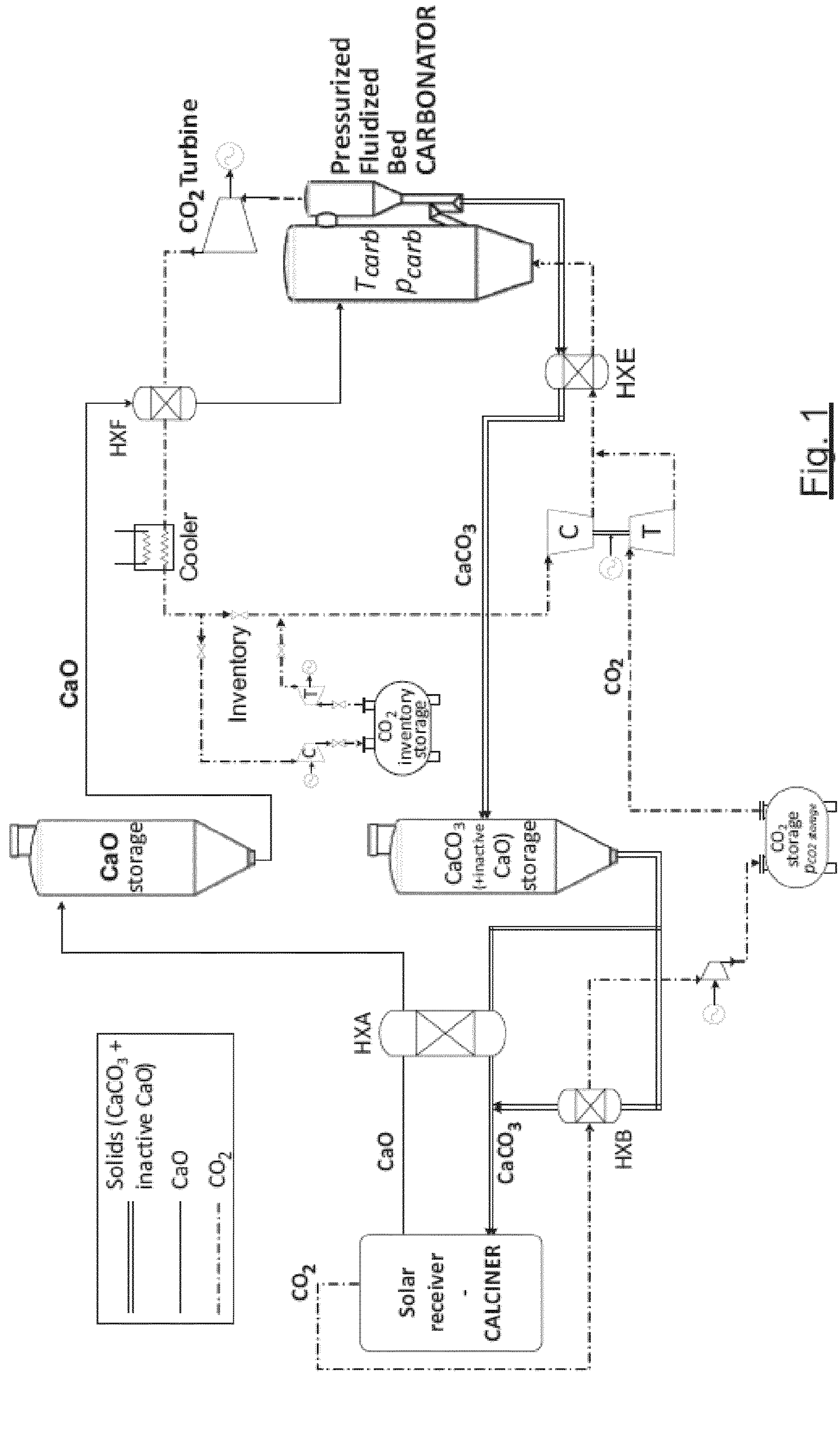
CO2 Turbine
Pressurized
Fluidized
Bed
CARBONATOR
Tcarb
pcarb
HXF
HXE
CaO
Cooler
C
T
CaCO3
Inventory
CO2 inventory storage
CO2
CaO storage
CaCO3 (+inactive CaO) storage
CO2 storage pCO2 storage
HXA
HXB
CaO
CaCO3
Solids (CaCO3 + inactive CaO)
CaO
CO2
CO2
Solar receiver - CALCINER

Fig. 1

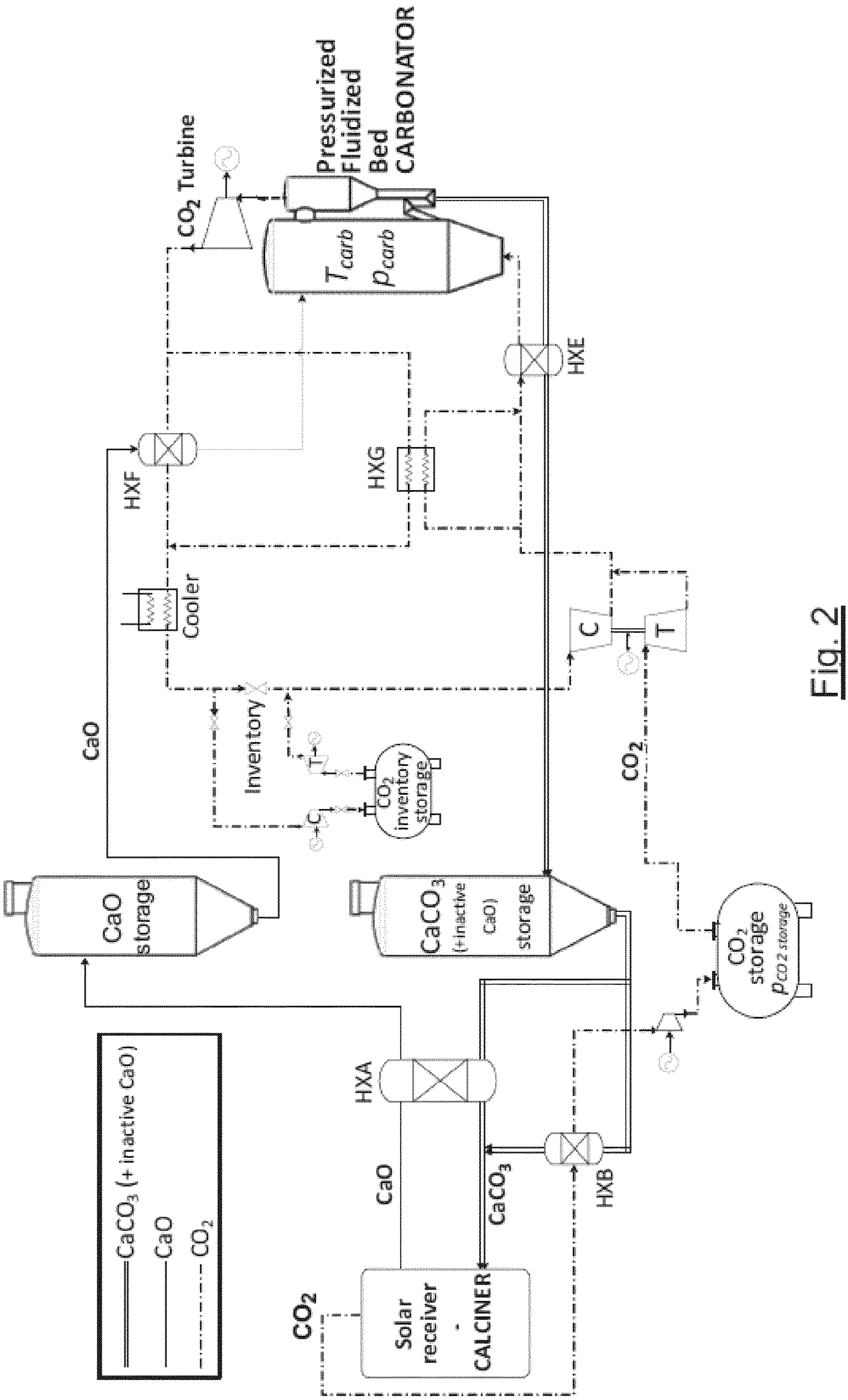
Pressurized
Fluidized
Bed
CARBONATOR
$CO_2$ Turbine
$T_{carb}$
$p_{carb}$
HXE
HXF
HXG
Cooler
C
T
CaO
Inventory
$CO_2$ inventory storage
CaO storage
$CaCO_3$ (+inactive CaO) storage
$CO_2$
$CO_2$ storage
$p_{CO2\ storage}$
HXA
HXB
CaO
$CaCO_3$
$CO_2$
Solar receiver - CALCINER
$CaCO_3$ (+ inactive CaO)
CaO
$CO_2$

Fig. 2

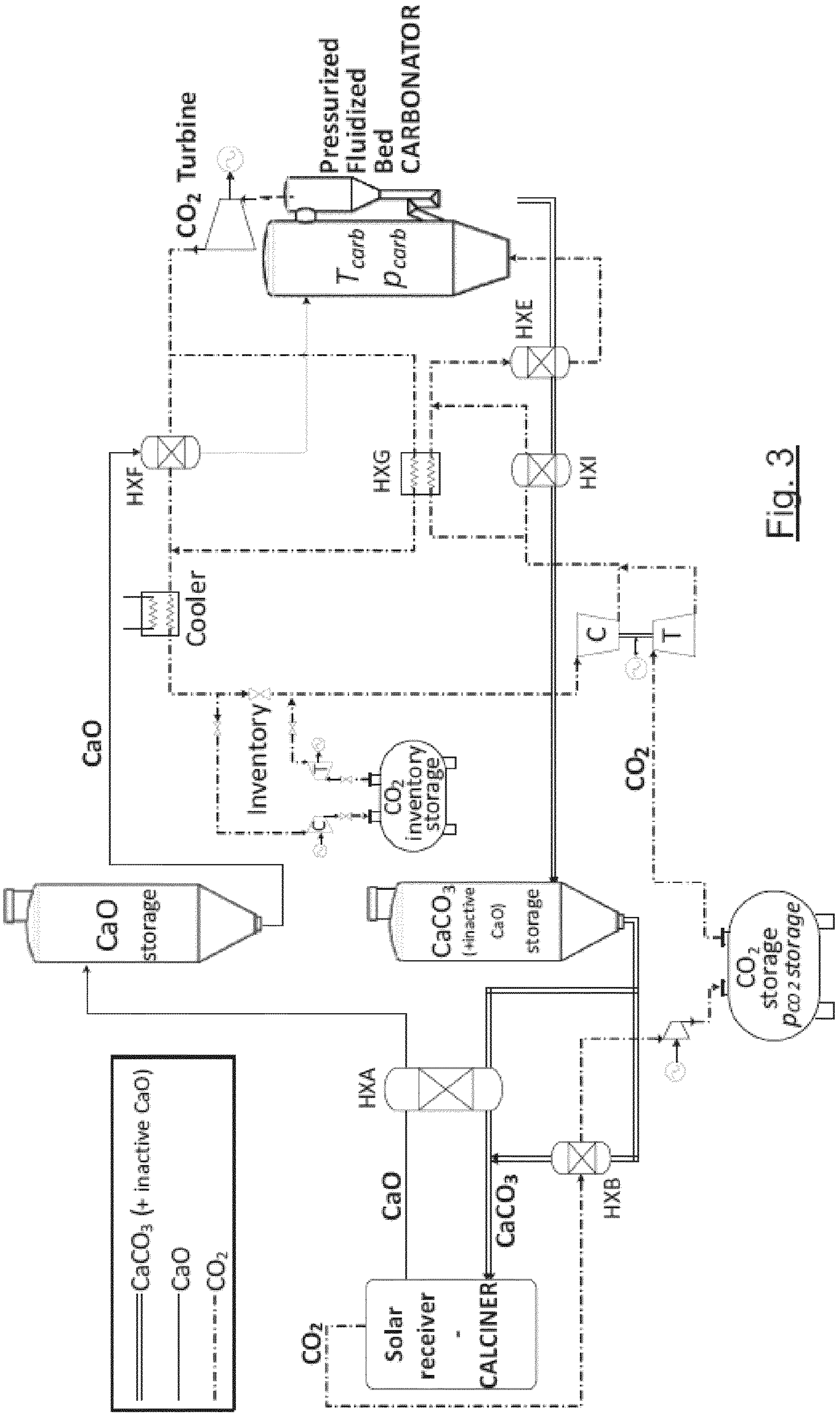
CO2 Turbine
Pressurized
Fluidized
Bed
CARBONATOR
$T_{carb}$
$p_{carb}$
HXF
HXE
HXG
HXI
Cooler
C
T
Inventory
CO2 inventory storage
CaO
CO2
CaO storage
CaCO3 (+inactive CaO) storage
CO2 storage $p_{CO2\ storage}$
HXA
HXB
CaO
CaCO3
CO2
Solar receiver - CALCINER
CaCO3 (+ inactive CaO)
CaO
CO2

Fig. 3

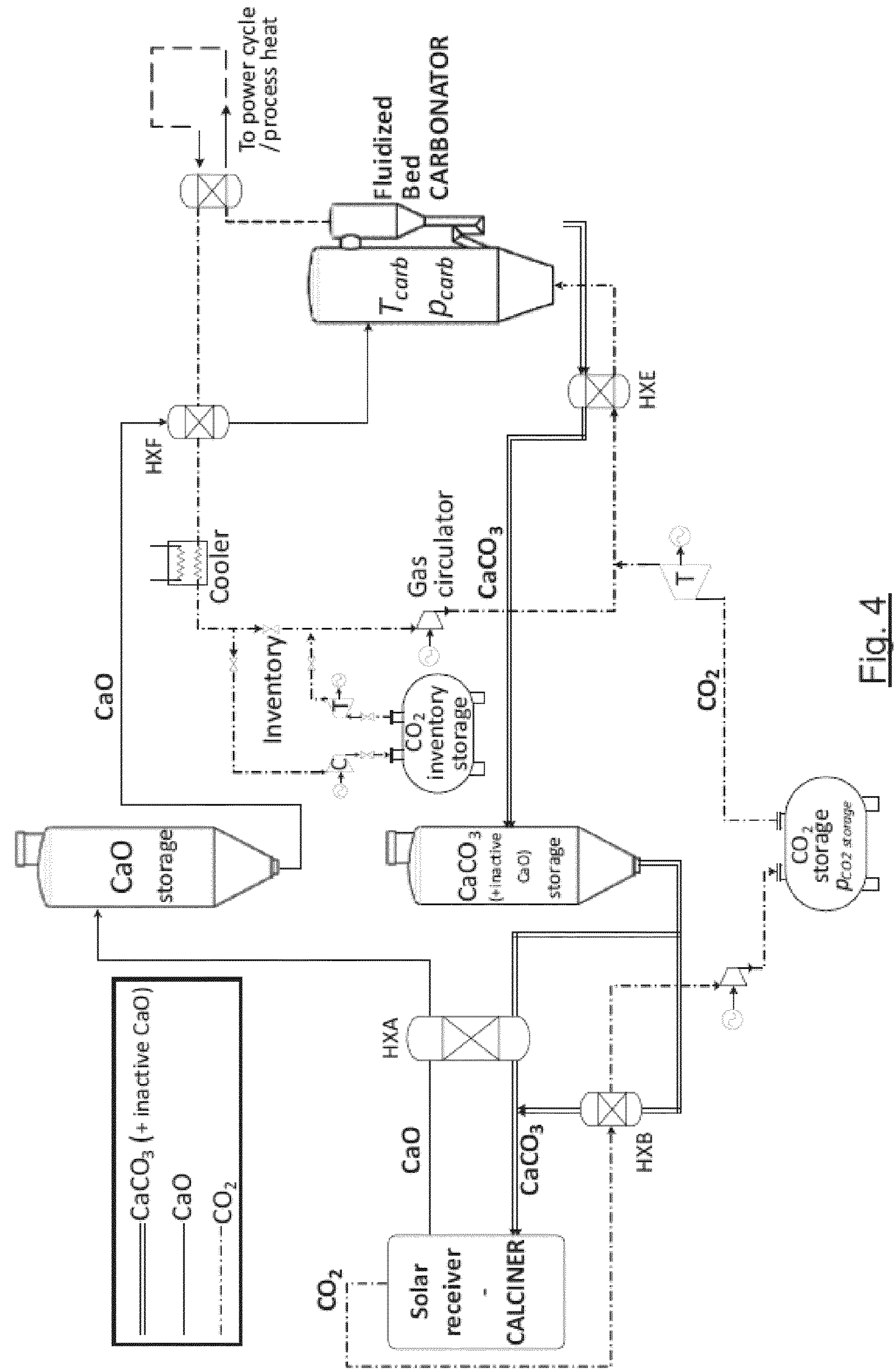
To power cycle /process heat
Fluidized Bed CARBONATOR
$T_{carb}$
$p_{carb}$
HXF
HXE
Cooler
Gas circulator
$CaCO_3$
CaO
Inventory
$CO_2$ inventory storage
T
C
$CO_2$
CaO storage
$CaCO_3$ (+inactive CaO) storage
$CO_2$ storage $p_{CO2\ storage}$
HXA
HXB
CaO
$CaCO_3$
$CO_2$
Solar receiver - CALCINER
$CaCO_3$ (+ inactive CaO)
CaO
$CO_2$

Fig. 4

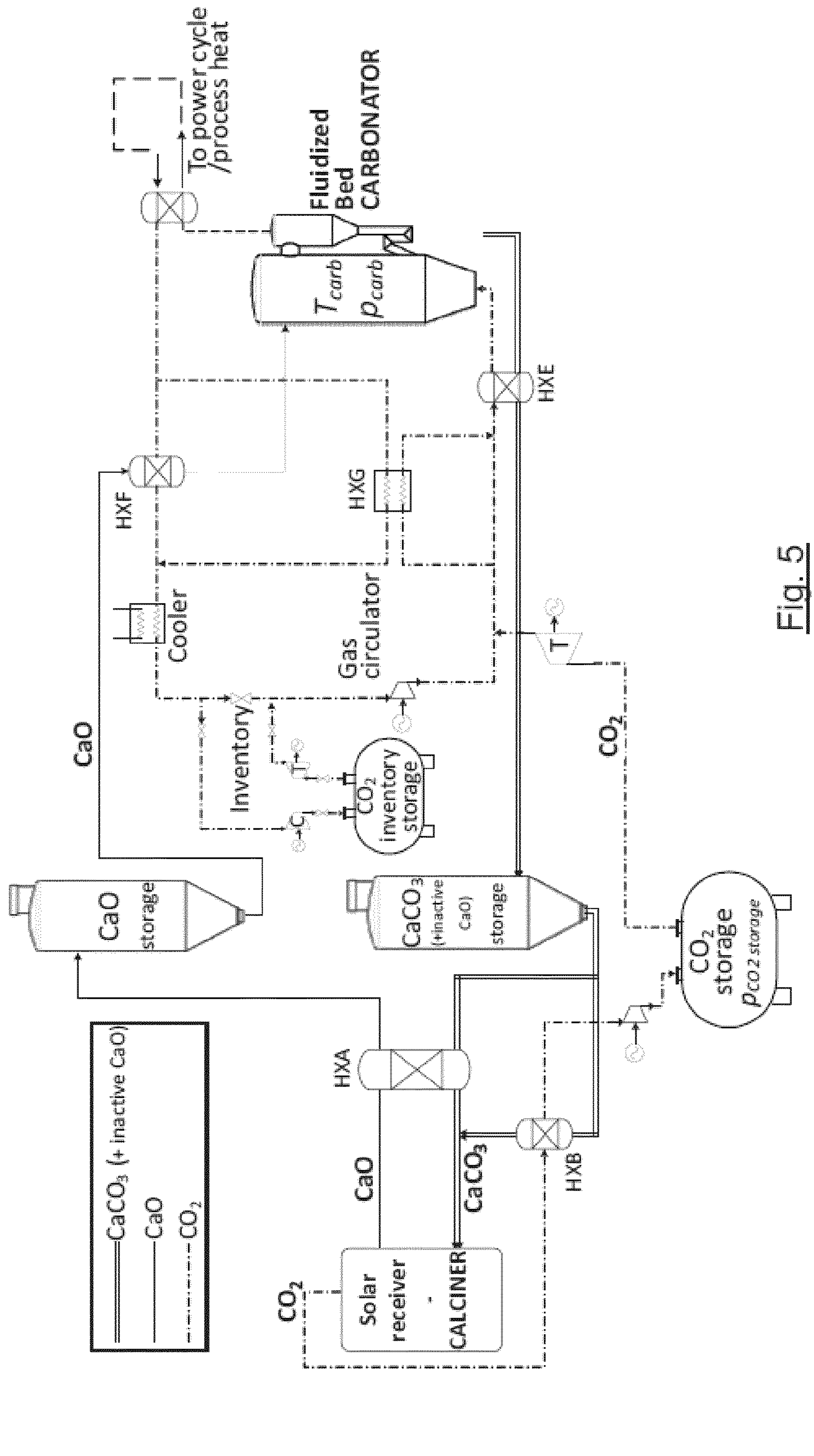
To power cycle
/process heat
Fluidized
Bed
CARBONATOR
$T_{carb}$
$p_{carb}$
HXE
HXF
HXG
Cooler
Gas
circulator
CaO
Inventory
$CO_2$
inventory
storage
CaO
storage
$CaCO_3$
(+inactive
CaO)
storage
T
$CO_2$
$CO_2$
storage
$p_{CO2\ storage}$
HXA
HXB
CaO
$CaCO_3$
Solar
receiver
-
CALCINER
$CO_2$
$CaCO_3$ (+ inactive CaO)
CaO
$CO_2$

Fig. 5

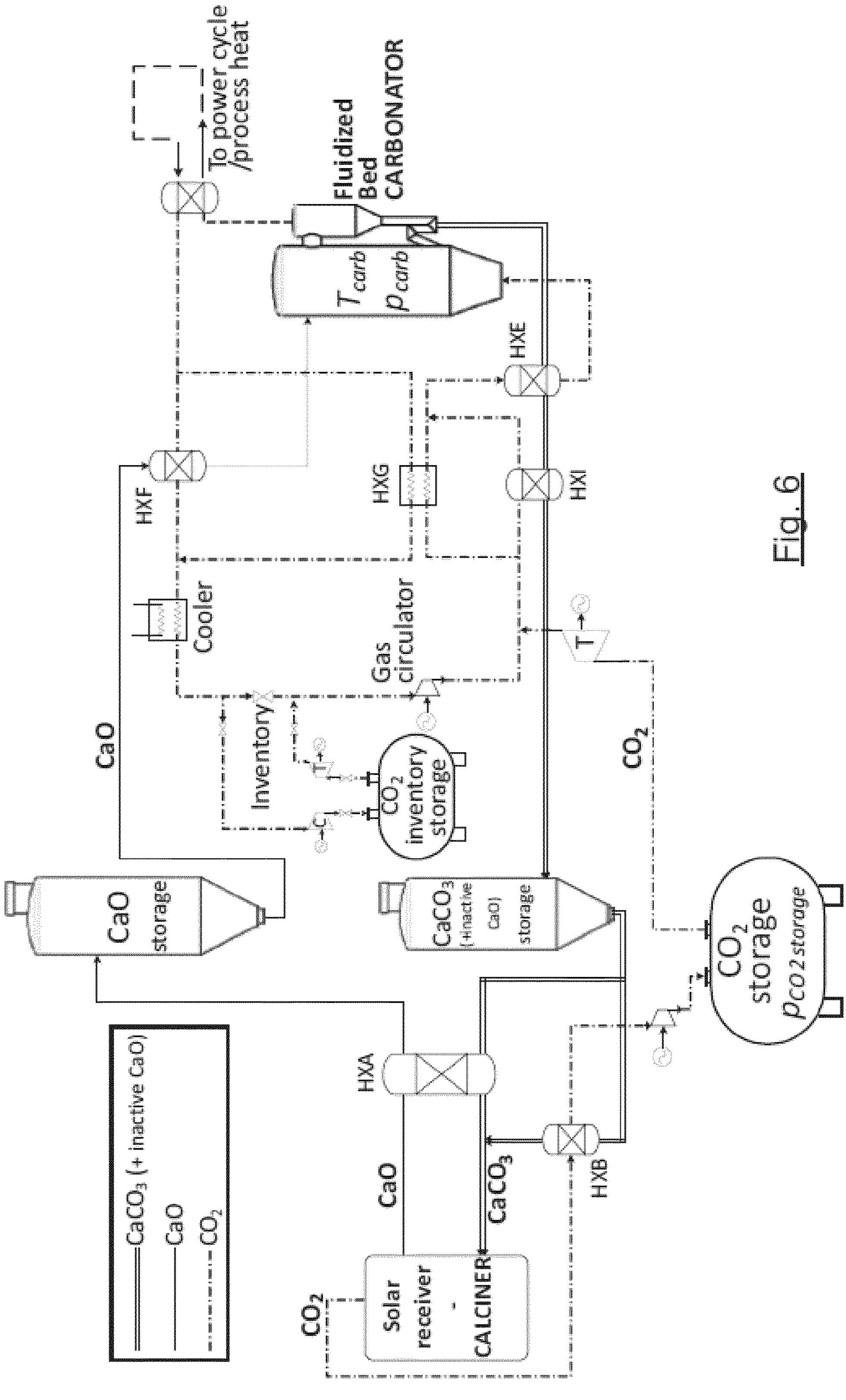
To power cycle
/process heat
Fluidized
Bed
CARBONATOR
$T_{carb}$
$p_{carb}$
HXE
HXF
HXG
HXI
Cooler
Gas
circulator
Inventory
$CO_2$
inventory
storage
CaO
CaO
storage
$CaCO_3$
(+inactive
CaO)
storage
$CO_2$
$CO_2$
storage
$p_{CO2\,storage}$
HXA
HXB
CaO
$CaCO_3$
$CO_2$
Solar
receiver
-
CALCINER
$CaCO_3$ (+ inactive CaO)
CaO
$CO_2$

Fig. 6

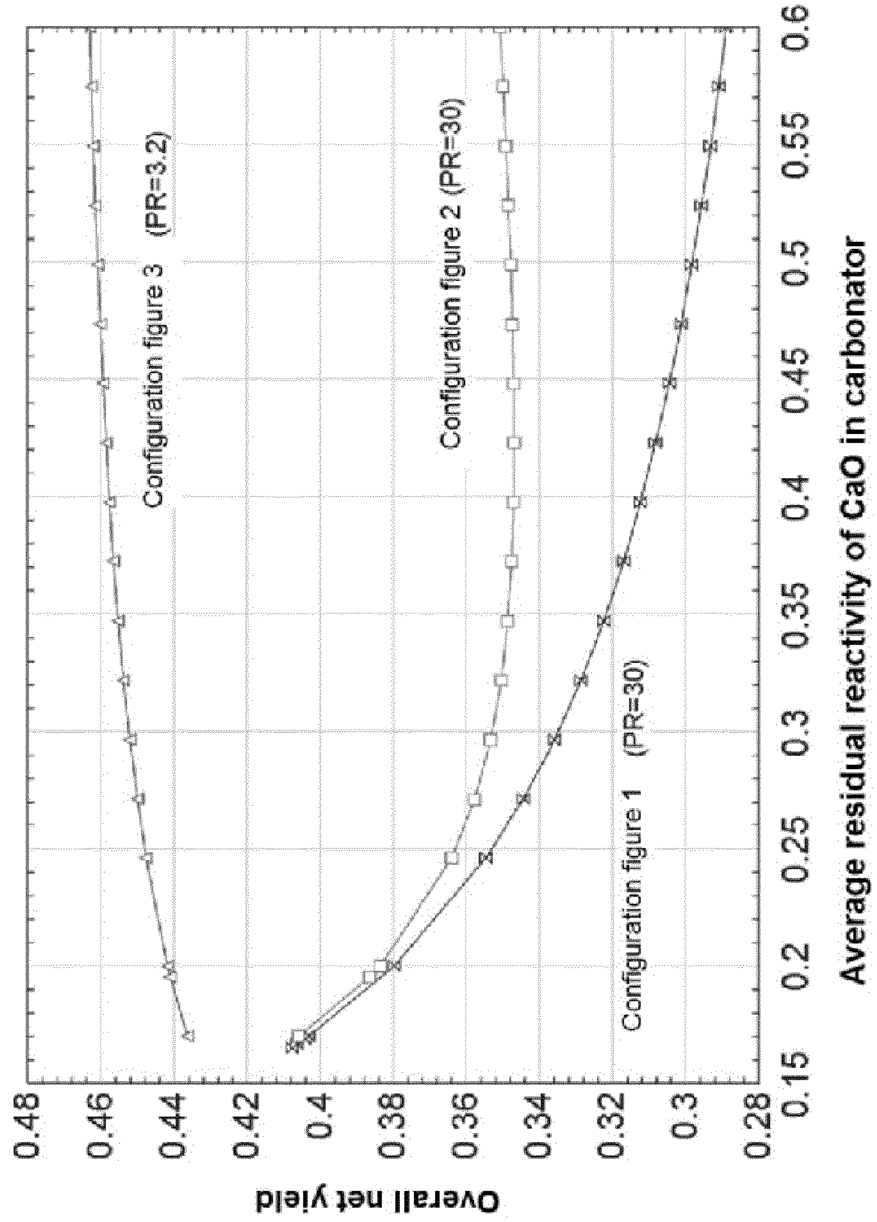
Overall net yield
Average residual reactivity of CaO in carbonator
Configuration figure 3 (PR=3.2)
Configuration figure 2 (PR=30)
Configuration figure 1 (PR=30)
0.48
0.46
0.44
0.42
0.4
0.38
0.36
0.34
0.32
0.3
0.28
0.15
0.2
0.25
0.3
0.35
0.4
0.45
0.5
0.55
0.6

Fig. 7

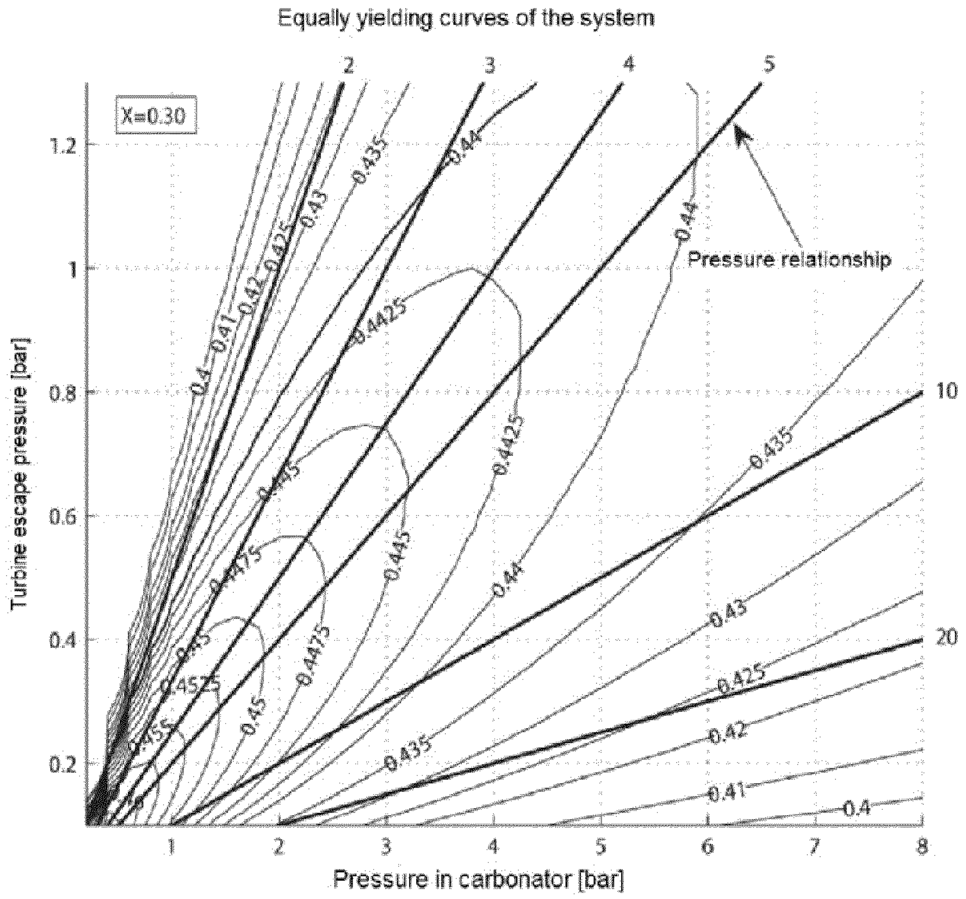
Equally yielding curves of the system
X=0.30
Pressure relationship
Turbine escape pressure [bar]
Pressure in carbonator [bar]
2
3
4
5
10
20
0.4
0.41
0.42
0.425
0.43
0.435
0.44
0.4425
0.445
0.4475
0.45
0.4525
0.455
1.2
1
0.8
0.6
0.4
0.2
1
2
3
4
5
6
7
8

Fig. 8

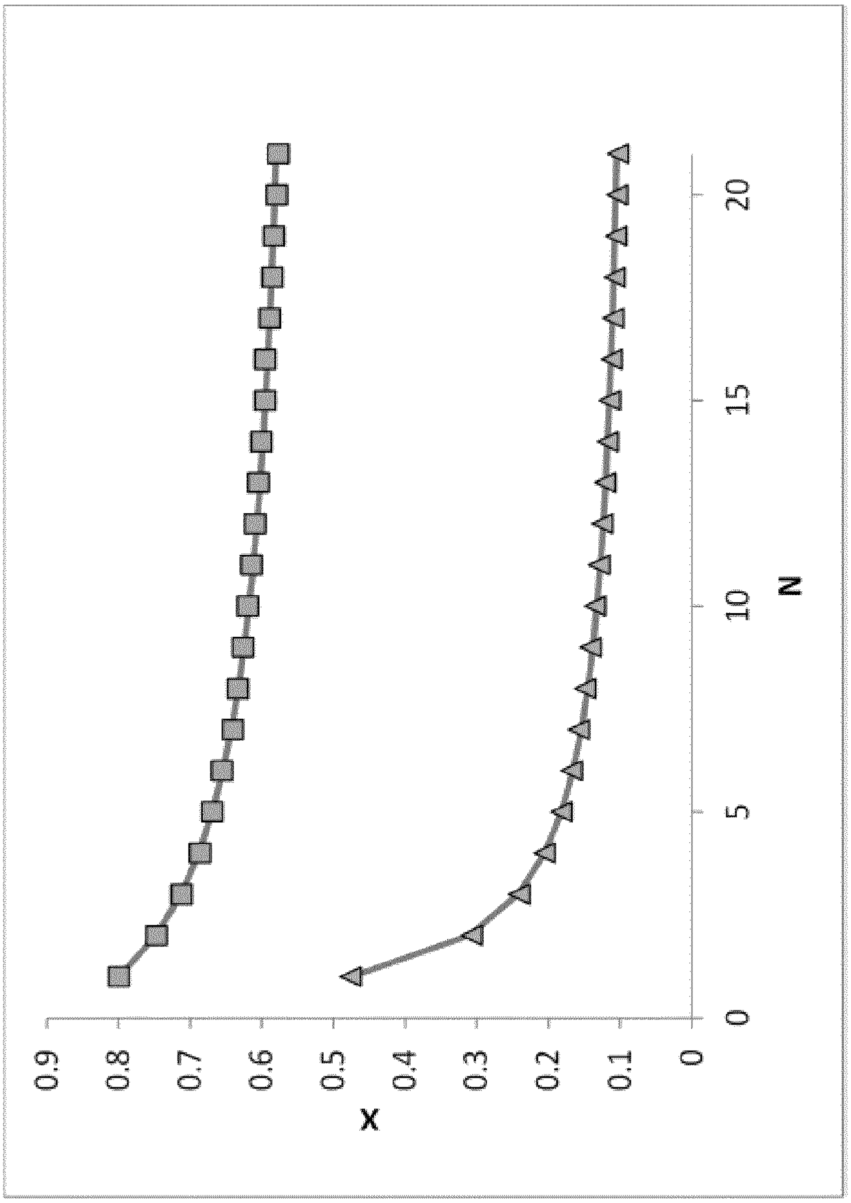


Fig. 9

# INTERNATIONAL SEARCH REPORT

International application No.
PCT/ES2016/070265

A. CLASSIFICATION OF SUBJECT MATTER

**See extra sheet**

According to International Patent Classification (IPC) or to both national classification and IPC

B. FIELDS SEARCHED

Minimum documentation searched (classification system followed by classification symbols)
F02C, C01B, C01F

Documentation searched other than minimum documentation to the extent that such documents are included in the fields searched

Electronic data base consulted during the international search (name of data base and, where practicable, search terms used)

EPODOC, INVENES, WPI, TXTUS, TXTEP, TXTGB, XPESP

C. DOCUMENTS CONSIDERED TO BE RELEVANT

| Category* | Citation of document, with indication, where appropriate, of the relevant passages | Relevant to claim No. |
|---|---|---|
| X | 21.6.2012, EDWARDS, S. et al "Calcium looping in solar power generation plants" Solar Energy, 2012, vol. 86, no 9, p. 2494-2503; fig. 2, punto 1.1 and 2; pág. 2501, segunda column | 1-10 |
| A | September 2012, MATTHEWS, L. et al "Thermodynamic analysis of solar thermochemical CO 2 capture via carbonation/calcination cycle with heat recovery" Energy, 2012, vol. 45, no 1, p. 900-907; punto 1; fig. 1 | 1-10 |
| A | EP 2762781 A1 (CONSEJO SUPERIOR INVESTIGACION) 06/08/2014, paragraphs [1, 14, 24, 32, 34] | 1-10 |

☐ Further documents are listed in the continuation of Box C. ☒ See patent family annex.

* Special categories of cited documents:
"A" document defining the general state of the art which is not considered to be of particular relevance.
"E" earlier document but published on or after the international filing date
"L" document which may throw doubts on priority claim(s) or which is cited to establish the publication date of another citation or other special reason (as specified)
"O" document referring to an oral disclosure use, exhibition, or other means.
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other documents , such combination being obvious to a person skilled in the art
"&" document member of the same patent family

| Date of the actual completion of the international search | Date of mailing of the international search report |
|---|---|
| 22/07/2016 | **(28/07/2016)** |
| Name and mailing address of the ISA/<br>OFICINA ESPAÑOLA DE PATENTES Y MARCAS<br>Paseo de la Castellana, 75 - 28071 Madrid (España)<br>Facsimile No.: 91 349 53 04 | Authorized officer<br>I. González Balseyro<br>Telephone No. 91 3496881 |

Form PCT/ISA/210 (second sheet) (January 2015)

## INTERNATIONAL SEARCH REPORT

Information on patent family members

International application No.
PCT/ES2016/070265

| Patent document cited in the search report | Publication date | Patent family member(s) | Publication date |
|---|---|---|---|
| EP2762781 A1 | 06.08.2014 | ES2555034T T3<br>WO2014118184 A1 | 28.12.2015<br>07.08.2014 |

Form PCT/ISA/210 (patent family annex) (January 2015)

## INTERNATIONAL SEARCH REPORT

International application No.
PCT/ES2016/070265

### CLASSIFICATION OF SUBJECT MATTER

***F02C1/00*** (2006.01)
***C01B31/20*** (2006.01)
***C01F11/04*** (2006.01)
***C01F11/18*** (2006.01)

Form PCT/ISA/210 (extra sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2478074 A1
- EP 2762781 A1


### Non-patent literature cited in the description


- **K. E. N'TSOUKPOE ; H. LIU ; N. LE PIERRÈS ; L. LUO.** A review on long-term sorption solar energy storage. *Renew. Sustain. Energy Rev.,* 2009, vol. 13 (9), 2385-2396
- **P. PARDO ; A. DEYDIER ; Z. ANXIONNAZ-MINVIELLE ; S. ROUGE ; M. CABASSUD ; P. COGNET.** A review on high temperature thermochemical heat energy storage. *Renew. Sustain. Energy Rev.,* 2014, vol. 32, 591-610
- **A. ABEDIN ; M. ROSEN.** A Critical Review of Thermochemical Energy Storage Systems. *Open Renew. Energy J.,* 2011, 42-46
- **S. E. B. EDWARDS ; V. MATERIC.** Calcium Looping in solar power generation plants. *Sol. Energy,* 2012, vol. 86 (9), 2494-2503
- **T. SHIMIZU ; T. HIRAMA ; H. HOSODA ; K. KITANO ; M. INAGAKI ; K. TEJIMA.** A Twin Fluid-Bed Reactor for Removal of CO2 from Combustion Processes. *Chem. Eng. Res. Des.,* 1999, vol. 77 (1), 62-68
- **J. C. ABANADES.** The maximum capture efficiency of CO2 using a carbonation/calcination cycle of CaO/CaCO3. *Chem. Eng. J.,* 2002, vol. 90 (3), 303-306
- **J. C. ABANADES ; D. ALVAREZ.** Conversion limits in the reaction of CO2 with lime. *Energy and Fuels,* 2003, vol. 17 (2), 308-315
- **N. RODRIGUEZ ; M. ALONSO ; J. C. ABANADES.** Average activity of CaO particles in a Calcium Looping system. *Chem. Eng. J.,* 2010, vol. 156 (2), 388-394
- **J. M. VALVERDE ; P. E. SANCHEZ-JIMENEZ ; L. A. PEREZ-MAQUEDA.** High and stable Co2 capture capacity of natural limestone at Ca-looping conditions by heat pretreatment and recarbonation synergy. *Fuel,* 2014, vol. 123, 79-85
- **B. ARIAS ; G. S. GRASA ; M. ALONSO ; J. C. ABANADES.** Post-combustion Calcium Looping process with a highly stable sorbent activity by recarbonation. *Energy Environ. Sci.,* 2012, vol. 5 (6), 7353
- **M. E. DIEGO ; B. ARIAS ; G. GRASA ; J. C. ABANADES.** Design of a novel fluidized bed reactor to enhance sorbent performance in CO2 capture systems using CaO. *Ind. Eng. Chem. Res.,* 2014, vol. 53 (24), 10059-10071
- **P. E. SANCHEZ-JIMENEZ ; J. M. VALVERDE ; L. A. PEREZ-MAQUEDA.** Multicyclic conversion of limestone at Ca-looping conditions: The role of solid-sate diffusion controlled carbonation. *Fuel,* 2014, vol. 127, 131-140
- **V. MANOVIC ; E. J. ANTHONY.** Thermal activation of CaO-based sorbent and self-reactivation during CO2 capture looping cycles. *Environ. Sci. Technol.,* 2008, vol. 42 (11), 4170-4174
- **J. M. VALVERDE.** Ca-based synthetic materials with enhanced CO2 capture efficiency. *J. Mater. Chem. A,* 2013, vol. 1 (3
- **Z. ZHOU ; P. XU ; M. XIE ; Z. CHENG ; W. YUAN.** Modeling of the carbonation kinetics of a synthetic CaO-based sorbent. *Chem. Eng. Sci.,* 2013, vol. 95, 283-290
- **Y. LI ; L. SHI ; C. LIU ; Z. HE ; S. WU.** Studies on CO2 uptake by CaO/Ca3Al2O6 sorbent in Calcium Looping cycles. *J. Therm. Anal. Calorim.,* 2015
- **S. CHAMPAGNE ; D. Y. LU ; A. MACCHI ; R. T. SYMONDS ; E. J. ANTHONY.** Influence of steam injection during calcination on the reactivity of CaO-based sorbent for carbon capture. *Ind. Eng. Chem. Res.,* 2013, vol. 52 (6), 2241-2246
- **R. T. SYMONDS ; D. Y. LU ; V. MANOVIC ; E. J. ANTHONY.** Pilot-scale study of CO 2 capture by CaO-based sorbents in the presence of steam and SO 2. *Ind. Eng. Chem. Res.,* 2012, vol. 51 (21), 7177-7184
- **V. MANOVIC ; E. J. ANTHONY.** Carbonation of CaO-based sorbents enhanced by steam addition. *Ind. Eng. Chem. Res.,* 2010, vol. 49 (19), 9105-9110
- **N. RODRIGUEZ ; M. ALONSO ; G. GRASA ; J. C. ABANADES.** Heat requirements in a calciner of CaCO3 integrated in a CO2 capture system using CaO. *Chem. Eng. J.,* 2008, vol. 138 (1-3), 148-154

- **A. MARTINEZ ; Y. LARA ; P. LISBONA ; L. M. ROMEO.** Energy penalty reduction in the Calcium Looping cycle. *Int. J. Greenh. Gas Control,* 2012, vol. 7, 74-81
- **B. ARIAS ; M. E. DIEGO ; J. C. ABANADES ; M. LORENZO ; L. DIAZ ; D. MARTINEZ ; J. ALVAREZ ; A. SANCHEZ-BIEZMA.** Demonstration of steady state CO2 capture in a 1.7MWth Calcium Looping pilot. *Int. J. Greenh. Gas Control,* 2013, vol. 18, 237-245
- **S. RAMKUMAR ; L. S. FAN.** *Calcium Looping process for high purity hydrogen production integrated with capture of carbon dioxide, sulfur and halides,* 2014
- **S. RAMKUMAR ; M. V IYER ; L. S. FAN.** *High purity, high pressure hydrogen production with in-situ co2 and sulfur capture in a single stage reactor,* 2014
- **A. WORMSER.** *Systems, devices and methods for Calcium Looping,* 2012
- **PEREJON A et al.** he Calcium-Looping technology for CO2 capture: On the important roles of energy integration and sorbent behavior. *Appl Energy,* 2015, vol. 162, 787-807
- **B. SARRION ; J. M. VALVERDE ; A. PEREJON ; L. A. PEREZ-MAQUEDA ; P. E. SANCHEZ-JIMENEZ.** On the multicycle activity of natural limestone/dolomite for cheap, efficient and non-toxic Thermochemical Energy Storage of Concentrated Solar Power. *Energy Technology*